# EUROPEAN PATENT APPLICATION

(11) **EP 4 708 503 A1**
(43) Date of publication of application: **11.03.2026**
(21) Application number: 24915420.4
(22) Date of filing: 26.12.2024
(51) Int. Cl.: H01M 50/24, H01M 50/264, H01M 10/653, H01M 10/6569, H01M 10/613, H01M 50/502

(54) **BATTERY MODULE WITH IMPROVED STABILITY**

(30) Priority: 02.01.2024 KR 20240000582
(71) Applicant: LG Energy Solution, Ltd., Seoul 07335 (KR)
(72) Inventor: MUN, Jiseon, Daejeon 34122 (KR)
(74) Representative: BCKIP Part mbB
(86) International application number: PCT/KR2024/021137
(87) International publication number: WO 2025/147008

(57) **Abstract**

The present invention provides: a structure of a battery module comprising: a plurality of battery cells stacked in widthwise direction, each of the plurality of battery cells having a pair of electrode leads protruding in upward direction; a frame having an open upper portion and accommodating the cell stack; and a resin having an insulating property and filling at least a portion of a space between the cell stack and the frame; and a method of manufacturing the same.

## Description

### [TECHNICAL FIELD]

This application claims the benefit of priority based on Korean Patent Application No. 10-2024-0000582 filed on January 2, 2024, entire content disclosed in the document of the patent applications is included as a part of this specification.

The present invention relates to a structure of a battery module with improved structural stability and/or thermal stability and a method for manufacturing the same.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used. Additionally, a plurality of such battery modules may be integrated to constitute a battery pack with higher output and larger capacity.

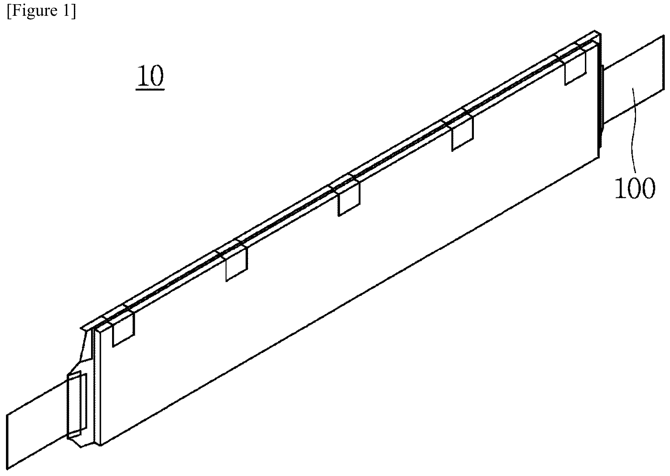

FIG. 1 illustrates a pouch-type battery cell. Referring to FIG. 1, a general pouch-type battery cell 10 is manufactured by folding a metal sheet in half and sealing the folded metal sheet with an electrode assembly accommodated therein. A pair of electrode leads 100 extend from the electrode assembly in lengthwise direction opposite to each other and protrude out of the pouch, thereby electrically connecting the electrode assembly to the outside.

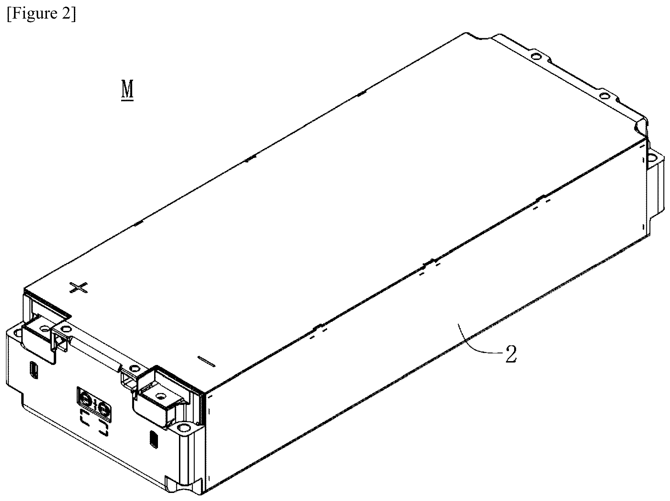

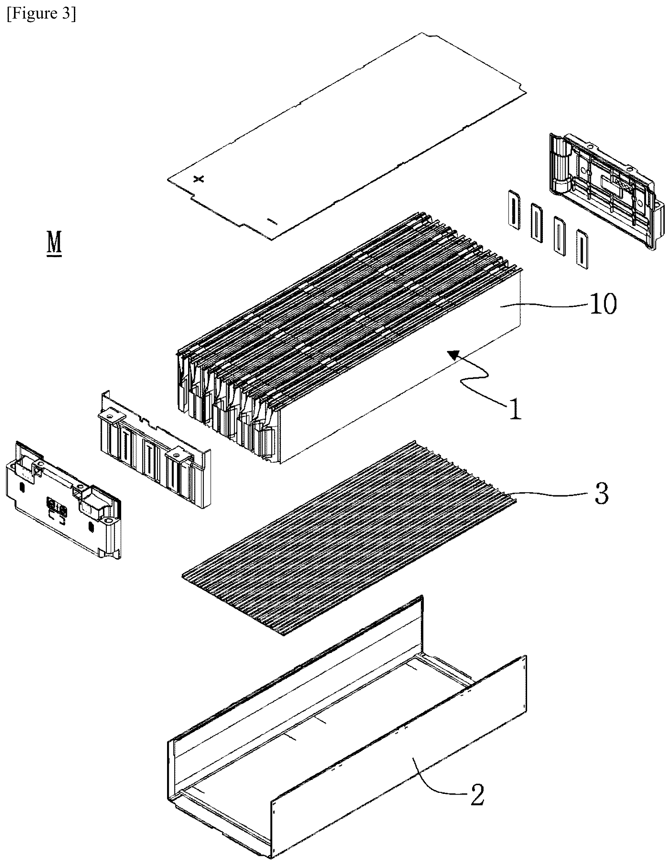

FIGS. 2 and 3 illustrate a structure of a conventional battery module. Referring to FIGS. 2 and 3, a conventional battery module M includes: a cell stack 1 in which a plurality of battery cells 10 are stacked; and a frame 2 that accommodates the same. The frame 2 may have a U-shape with open front and rear ends and an open upper portion, and a bus bar that connects the electrode leads 100 together and a pair of end plates that cover the open front and rear ends are disposed at the two lengthwise ends of the cell stack 1.

Meanwhile, the battery cell 10 generates some heat during charge and discharge. Since heat accumulated in the battery cell 10 may affect the charge and discharge performance, it is necessary to allow the heat to be dissipated out of the frame 2. In order to achieve this, the battery module M is coated with a resin 3 that is cured after the cell stack 1 is placed on the bottom plate of the frame 2. The resin 3 includes a thermally conductive resin having high thermal conductivity.

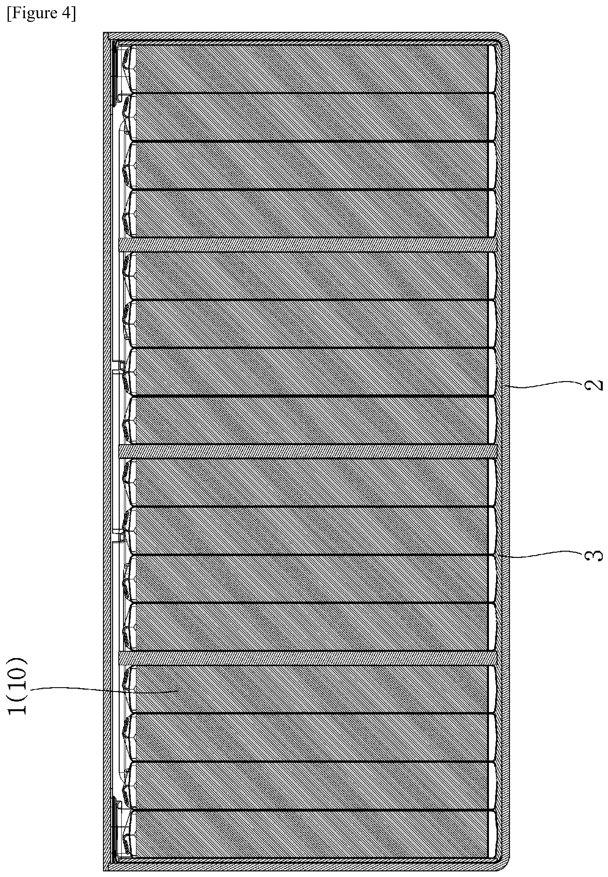

FIG. 4 illustrates a cross-section of the battery module of FIG. 2. Referring to FIG. 4, the resin 3 adhesively fixes the cell stack 1 on the bottom plate of the frame 2 and simultaneously conducts the heat generated from the cell stack 1 to the frame 2 to dissipate the same.

However, since the resin 3 is in contact with only the bottom of the cell stack 1, the heat generated in the cell stack 1 may not be sufficiently dissipated, and the cell stack 1 may also move without being fixed to the frame 2.

In particular, the battery cell 10 is at risk of ignition due to a short circuit, etc. such that it is necessary to block thermal propagation between the battery cells 10. Here, the resin 3 may easily melt in high temperature heat, thereby damaging the structural thermal stability of the cell stack 1.

In addition, referring back to FIG. 3, the battery module M having the above-described structure has the disadvantages of low durability and inconvenient assembly because it is composed of a plurality of parts including the frame 2 of the housing and a pair of end plates.

### [DISCLOSURE]

### [TECHNICAL PROBLEM]

In order to solve the problems of the above-described prior art, it is an object of the present invention to provide a structure of a battery module having excellent structural and/or thermal stability and a method for manufacturing the same.

Specifically, it is an object of the present invention to provide a structure of a battery module having excellent heat dissipation performance.

In addition, it is an object of the present invention to provide a structure of a battery module in which the movement of battery cells in the frame is prevented.

It is another object of the present invention to provide a structure of a battery module having excellent structural stability during thermal runaway and blocking thermal propagation between cells.

It is yet another object of the present invention to provide a structure of a battery module simple and economical to manufacture, a structure of a battery pack and/or a vehicle including the same, and a method for manufacturing the same.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure of a battery module including: a plurality of battery cells arranged in widthwise direction, each of the plurality of battery cells having a pair of electrode leads protruding in upward direction; a frame having an open upper portion and accommodating the plurality of battery cells; and a resin having an insulating property and filling at least a portion of a space between the plurality of battery cells and the frame.

The resin is filled in the space between the plurality of battery cells and the frame, and insulates the plurality of battery cells from the frame while adhesively fixing the same to prevent the plurality of battery cells from moving. Accordingly, the battery module may have excellent insulating properties and structural stability at the same time.

The resin may include an insulating and adhesive resin for excellent adhesiveness and insulating property. For example, the resin may include a silicone resin.

The resin may include at least one of a phase changing material and a thermally conductive resin. Accordingly, the resin may absorb and dissipate heat generated from the battery cell. For example, the resin may include paraffin.

The resin may include a flame retardant material. Accordingly, the resin may not completely melt but maintain the structure thereof even under high temperature heat caused by thermal runaway of the battery cell. Accordingly, the stability of the plurality of battery cells 1 may be improved even during thermal runaway. For example, the resin may include an aluminum hydroxide.

The above battery module may further include a mount member disposed at the bottom of the frame whereon the plurality of battery cells are mounted with a predetermined intervals therebetween. Accordingly, the plurality of battery cells may be mounted in an upright manner with an appropriate interval therebetween in the frame before being filled with the resin.

Despite the term thereof, the mount member may be a separate member that is arranged at the bottom of the frame, or may refer to the shape of the bottom of the frame itself.

The mount member may include at least one of a phase changing material and a thermally conductive resin. Accordingly, the mount member may absorb and dissipate heat generated from the battery cell. For example, the mount member may include paraffin.

The mount member may include a flame retardant material. Accordingly, the mount member may not completely melt but maintain the structure thereof even under high temperature heat caused by thermal runaway of the battery cell 10. Accordingly, the stability of the plurality of battery cells 1 may be improved even during thermal runaway. For example, the mount member may include an aluminum hydroxide.

The resin may be provided to fill the space between at least one pair of battery cells. Accordingly, the resin may perform at least one of the following functions: blocking thermal propagation between the battery cells; fixing the battery cells; making the surface pressure applied to the battery cells in widthwise direction uniform; and absorbing heat between the battery cells.

At least one of the plurality of battery cells may have a tapered portion at an upper end portion thereof having a width narrowing in upward direction upper end portion. The tapered portion may not be subjected to pressure in the stacking direction when the plurality of the battery cells is stacked. Here, the upper end portion of the resin may be disposed higher than where the tapered portion begins such that surface pressure is applied to the tapered portion to make the surface pressure applied to the battery cell 10 constant.

The upper end portion of the resin may be higher than that of the plurality of battery cells excluding the electrode lead. In such case, the resin may apply a uniform pressure to the upper portion of the battery cell while fixing the same, and may absorb heat emitted upward from the battery cell.

The lower end portion of the resin may be lower than that of the plurality of battery cells. Accordingly, fixation, insulation, and/or thermal conductivity between the battery cell and the bottom of the frame may be improved.

The battery module may further include a resin cover that covers the exposed upper surface of the resin. As the resin cover is provided, overflow or unexpected deformation of the resin may be prevented before the resin is cured.

According to an embodiment of the present invention, the upper end portion of the resin may be disposed lower than that of the plurality of battery cells, and the resin cover may have a plurality of slits arranged in widthwise direction with the plurality of battery cells inserted therein vertically. The plurality of battery cells may be more firmly fixed while maintaining an appropriate gap from each other by being inserted in the slits.

The battery module may further include a bus bar disposed above the plurality of battery cells and electrically connecting the electrode leads to each other. Unlike the case where the bus bar should be connected to two lengthwise sides of the plurality of battery cells, the bus bar frame where the bus bar is installed may be formed as a single member, which is economical. When the resin cover is provided, the bus bar may be installed even before the resin is cured.

The present invention also provides structures of a battery pack that incorporates the battery module and a vehicle that incorporates the same.

A plurality of battery modules may be integrated into a battery pack to increase the capacity and/or voltage thereof. The battery pack may include an exhaust device capable of discharging gases and flames emitted when the battery module ignites. The battery pack may be built into a vehicle as a power source. The vehicle may include an electric vehicle, a hybrid vehicle, etc.

The present invention also provides a method of manufacturing a battery module including: a step of placing the plurality of battery cells in the frame; and a step of injecting an uncured resin into the frame thereafter.

According to the present invention, the electrical, structural and/or thermal stability of the battery module may be improved by filling and curing the resin in the gap between the plurality of battery cells and the frame, thereby providing a simple and economical method of manufacturing the battery module.

The uncured resin may be partially injected into the frame before the plurality of battery cells is placed in the frame. Accordingly, sufficient resin may be interposed between the plurality of battery cells and the bottom of the frame.

When the battery module includes the mount member, the step of placing a cell stack in a frame may include: a step of placing the mount member at a bottom of the frame; and a step of mounting the plurality of battery cells on the mount member.

The method of manufacturing a battery module may further include: a step of waiting for the uncured resin to cure; and a step of installing a bus bar electrically connecting electrode leads to each other.

Alternatively, when the battery module includes the resin cover, the method of manufacturing a battery module may further include: a step of installing a resin cover covering an exposed upper surface of the resin; and a step of installing a bus bar electrically connecting electrode leads to each other. In such case, the bus bar may be installed without waiting for the resin to cure, which is efficient.

### [ADVANTAGEOUS EFFECTS]

The present invention may provide a structure of a battery module having excellent structural and/or thermal stability and a method for manufacturing the same.

Specifically, the present invention may provide a structure of a battery module having excellent heat dissipation performance as the contact area between the battery cell and the resin is large.

In addition, the present invention may also provide a structure of a battery module in which movement of the battery cell in the frame is prevented as the battery cell is fixed to the frame over a large area.

The present invention may also provide a structure of a battery module having excellent structural stability during thermal runaway and blocking thermal propagation between cells by providing a flame retardant resin between the battery cells.

The present invention may also provide a structure of a battery module and a manufacturing method thereof that does not require large man-hours for assembly and is economical as the material is simple.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a pouch-type battery cell.
FIGS. 2 and 3 illustrate a structure of a conventional battery module.
FIG. 4 illustrates a cross-section of the battery module of FIG. 2.
FIG. 5 illustrates a structure of a battery module according to an embodiment of the present invention.
FIG. 6 illustrates a structure of a battery cell according to an embodiment of the present invention.
FIG. 7 illustrates a mount member according to an embodiment of the present invention.
FIGS. 8 and 9 illustrate a mount member installed at the bottom of the frame according to an embodiment of the present invention.
FIGS. 10 and 11 illustrate a frame and a cross-section thereof with battery cells mounted thereon according to an embodiment of the present invention.
FIGS. 12 and 13 illustrate a battery module with a resin cover removed according to an embodiment of the present invention.
FIG. 14 illustrates a resin cover according to an embodiment of the present invention.
FIGS. 15 and 16 illustrate an exterior of a battery module and a cross-section thereof, respectively, according to an embodiment of the present invention.
FIGS. 17 and 18 illustrate a battery pack including a battery module and a vehicle including the battery pack, respectively, according to an embodiment of the present invention.
FIG. 19 illustrates a method of manufacturing a battery module according to an embodiment of the present invention.

### [DESCRIPTION OF REFERENCE NUMERALS]

1: cell stack
   10: battery cell
   100: electrode lead
   101: tapered portion
2: frame
   20: mount member
   200: groove
3: resin
4: resin cover
   40: slit
M: battery module
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [STRUCTURES OF BATTERY MODULE AND CELL STACK]

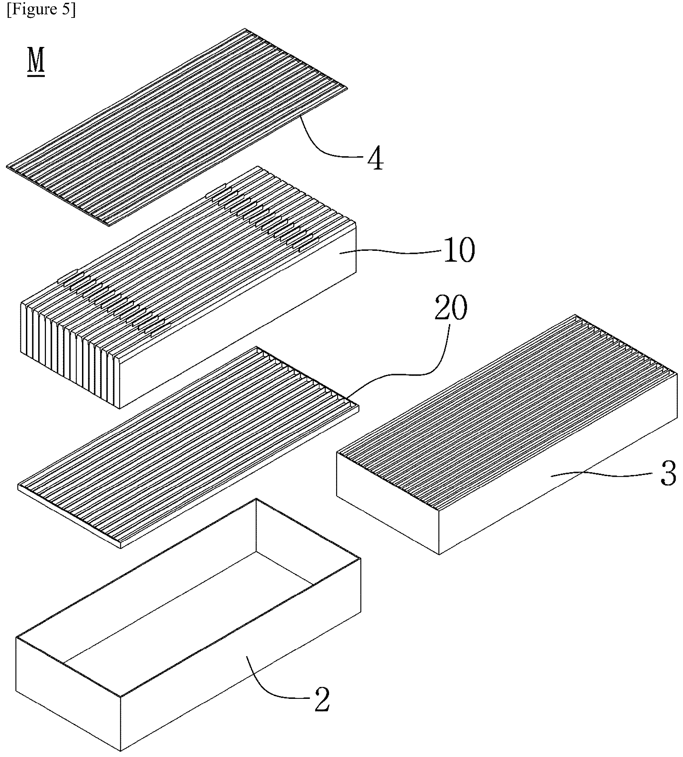

Hereinafter, with reference to FIGS. 5 to 8, structures of a battery module and a battery cell included therein according to an embodiment of the present invention will be described in detail.

FIG. 5 illustrates a structure of a battery module according to an embodiment of the present invention. Referring to FIG. 5, a battery module M according to an embodiment of the present invention includes a plurality of battery cells 10 stacked in widthwise direction, a frame 2 having an open upper portion and accommodating the battery cell 10, and a resin 3 having an insulating property an filling at least a portion of the space between the battery cell 10 and the frame 2.

The frame 2 may be, but not limited thereto, a substantially rectangular box having an open upper portion.

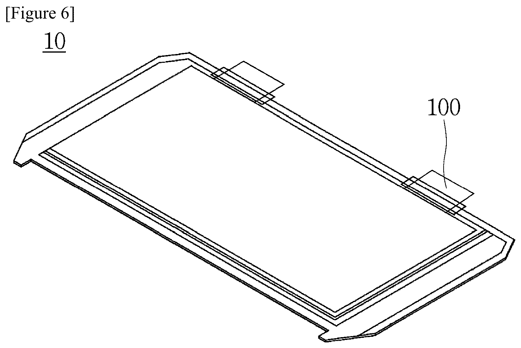

FIG. 6 illustrates a structure of a battery cell according to an embodiment of the present invention. Referring to FIG. 6, the battery cell 10 may include an electrode assembly and a sealed pouch encompassing the electrode assembly. A pair of electrode leads 100 may extend from the electrode assembly and protrude out of the pouch.

According to the embodiment, the pair of electrode leads 100 may protrude in the same direction from one end of the battery cell 10. Specifically, the pair of electrode leads 100 may protrude from the long sealed side of the pouch.

Referring back to FIG. 5, the battery cell 10 may be accommodated in the frame 2 with the electrode leads 100 facing upward. According to an embodiment of the present invention, since all of the electrode leads 100 protrude in upward direction, the frame 2 may be formed as a single body having an open upper portion rather than having a composite parts such as a U-shaped frame and a pair of end plates, thereby providing excellent sealing and structural stability.

### [MOUNTING STRUCTURE OF BATTERY CELL]

Referring back to FIG. 5, the battery module M may further include a mount member 20.

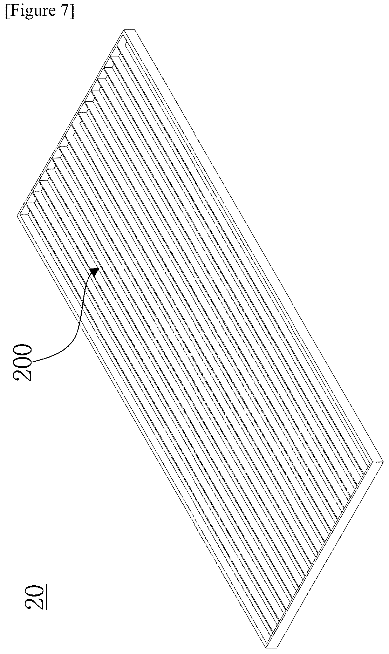

Hereinafter, with reference to FIGS. 7 to 11, a structure wherein a battery cell is mounted in a frame according to an embodiment of the present invention will be described in detail.

FIG. 7 illustrates a mount member according to an embodiment of the present invention. Referring to FIG. 7, a mount member 20 may include a plurality of grooves 200 recessed downward. The plurality of grooves 200 may extend in length direction and be arranged in width direction.

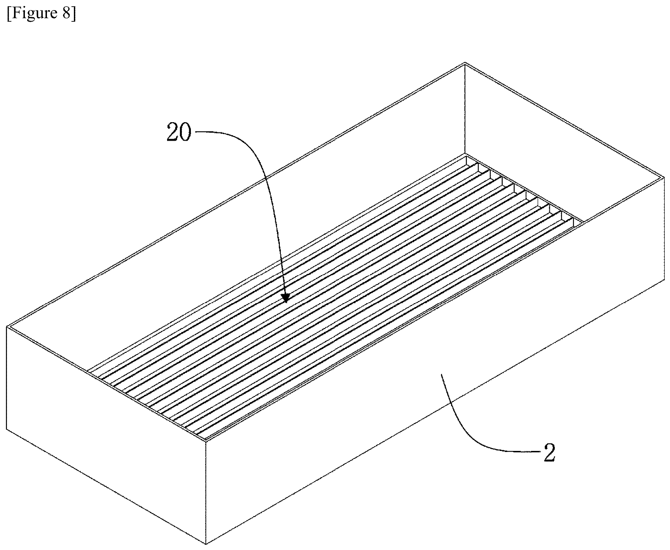

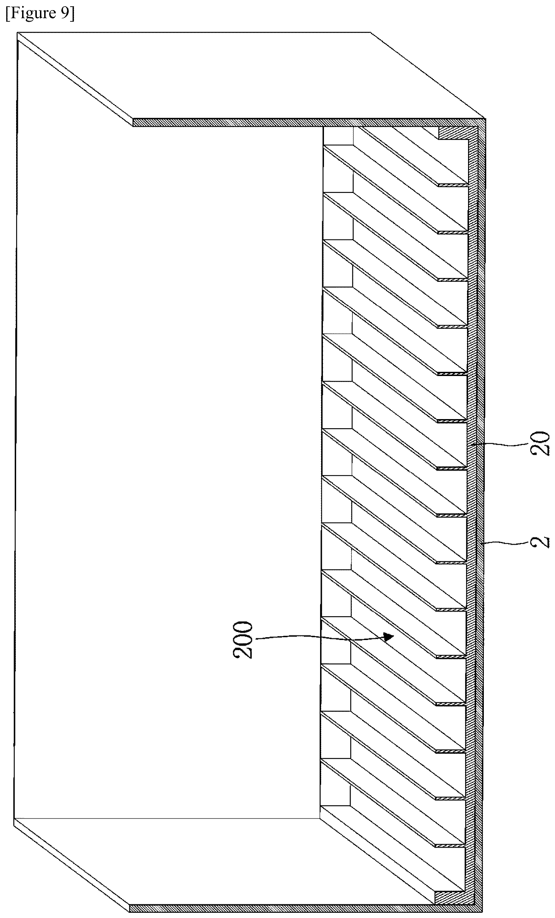

FIGS. 8 and 9 illustrate a mount member installed at the bottom of the frame according to an embodiment of the present invention. Referring to FIGS. 8 and 9, the mount member 20 may be installed at the bottom of the frame 2.

According to a modified example, it is possible that the mount member 20 is not provided as a separate member, and the bottom of the frame 2 itself may be provided with grooves in which the battery cells 10 are be mounted.

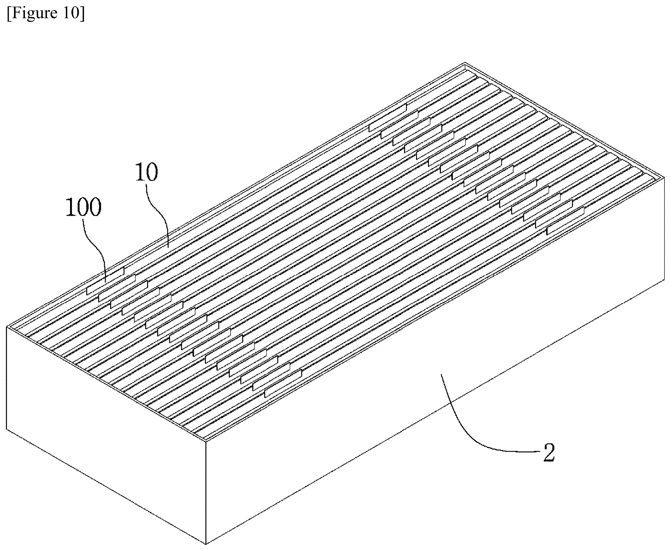

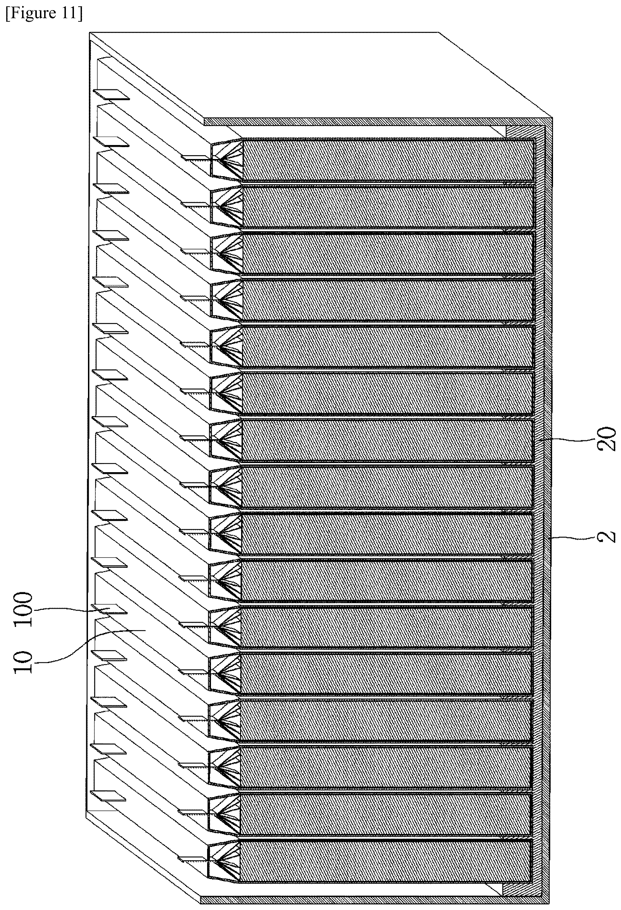

FIGS. 10 and 11 illustrate a frame and a cross-section thereof with battery cells mounted thereon according to an embodiment of the present invention. Referring to FIGS. 10 and 11, the battery cell 10 may be mounted and supported with the lower end thereof inserted in the groove 200 before the frame 2 is filled with the resin 3. As the grooves 200 are arranged to be spaced apart from each other in width direction, the battery cells 10 may also be mounted upright and spaced apart from each other in width direction.

The mount member 20 may include at least one of a phase changing material and a thermally conductive resin. Accordingly, the mount member 20 may absorb and dissipate heat generated from the battery cell 10. For example, the mount member 20 may include paraffin.

The mount member 20 may include a flame retardant material. Accordingly, the mount member 20 may not completely melt but maintain the structure thereof even under high temperature heat caused by thermal runaway of the battery cell 10. Accordingly, the stability of the battery cell 10 may be improved even during thermal runaway. For example, the mount member 20 may include an aluminum hydroxide.

### [MATERIAL AND SHAPE OF RESIN]

Referring back to FIG. 5, after the plurality of battery cells 10 is accommodated in the frame 2, at least a portion of the remaining space inside the frame 2 may be filled with the resin 3. The resin 3 may be injected into the frame 2 and cured. However, the method of filling the resin 3 in the frame 2 is not limited thereto. Various methods such as partially immersing the plurality of battery cells 10 after injecting the resin 3 and foam filling may be employed.

The resin 3 is filled in the space between the plurality of battery cells 10 and the frame 2, and insulates the plurality of battery cells 10 from the frame 2 while adhesively fixing the same to prevent the plurality of battery cells 10 from moving. Accordingly, the battery module M may have excellent insulating properties and structural stability at the same time.

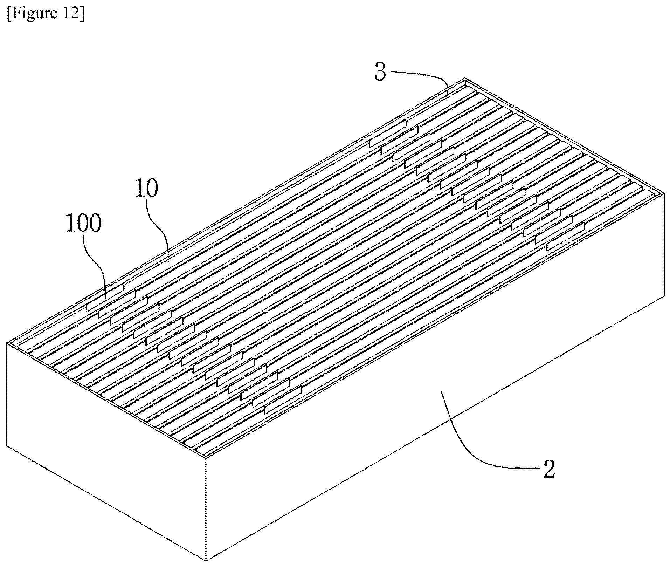

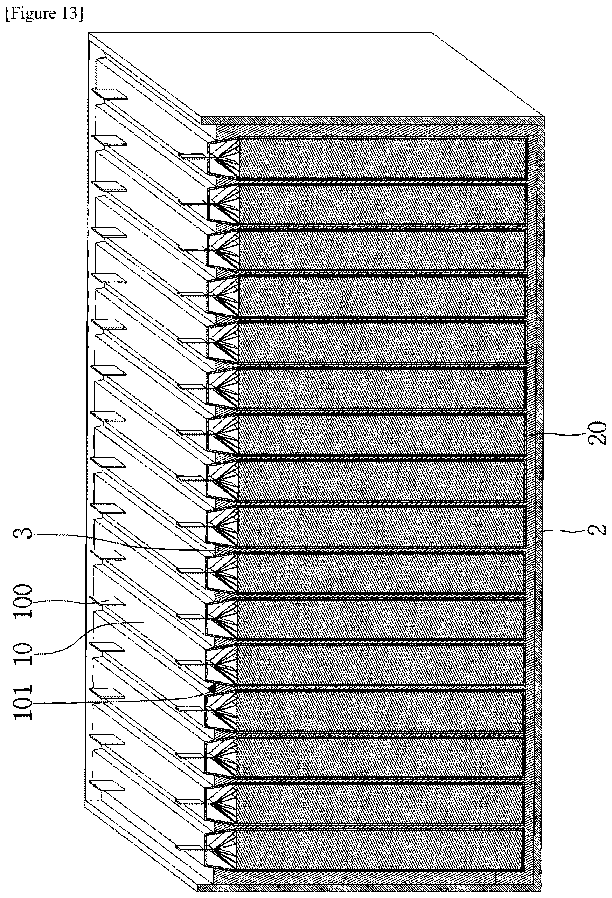

Hereinafter, with reference to FIGS. 12 and 13, the material and shape of the resin according to an embodiment of the present invention will be described in detail.

FIGS. 12 and 13 illustrate a battery module with a resin cover removed according to an embodiment of the present invention. Referring to FIGS. 12 and 13, the resin 3 may be provided to fill the space between at least one pair of battery cells 10. Accordingly, the resin 3 may perform at least one of the following functions: blocking thermal propagation between the battery cells 10; fixing the battery cells 10; making the surface pressure applied to the battery cells 10 in widthwise direction uniform; and absorbing heat between the battery cells 10.

When an uneven surface pressure is applied to the battery cell 10 in the stacking direction, the gap between the electrodes built into the battery cell 10 and/or the distribution of the charged electrolyte solution may change, which may affect the performance of the battery cell 10. This may also cause a short circuit due to precipitation of the electrolyte solution. Therefore, it is necessary to ensure that the battery cell 10 receives a uniform surface pressure in the stacking direction.

At least one of the plurality of battery cells 10 according to an embodiment of the present invention may have a tapered portion 101 at an upper end portion thereof having a width narrowing in upward direction upper end portion. The tapered portion 101 may not be subjected to pressure in the stacking direction when the plurality of the battery cells is stacked. Here, the upper end portion of the resin 3 may be disposed higher than where the tapered portion 101 begins such that surface pressure is applied to the tapered portion 101 to make the surface pressure applied to the battery cell 10 constant.

The upper end portion of the resin 3 according to an embodiment of the present invention may be disposed lower that of the plurality of battery cells 10.

Alternatively, the upper end portion of the resin 3 may be higher than that of the plurality of battery cells 10 excluding the electrode lead 100. In such case, the resin 3 may apply a uniform pressure to the upper portion of the plurality of battery cells 10 while fixing the same, and may absorb heat from the plurality of battery cells 10 emitted upward.

According to an embodiment of the present invention, the lower end portion of the resin 3 may be lower than that of the plurality of battery cells 10. Accordingly, fixation, insulation, and/or thermal conductivity between the plurality of battery cells 10 and the bottom of the frame 2 may be improved.

Alternatively, the lower end portion of the resin 3 may be positioned at the same height as or higher than that of the plurality of battery cells 10.

The resin 3 may include at least one of a phase changing material and a thermally conductive resin. Accordingly, the resin 3 may absorb and dissipate heat generated from the battery cell 10. For example, the resin 3 may include paraffin.

The resin 3 may include a flame retardant material. Accordingly, the resin 3 may not completely melt but maintain the structure thereof even under high temperature heat caused by thermal runaway of the battery cell 10. Accordingly, the stability of the plurality of battery cells 10 may be improved even during thermal runaway. For example, the resin 3 may include an aluminum hydroxide.

### [RESIN COVER AND BUS BAR]

Referring back to FIG. 5, the battery module M may further include a resin cover 4 that covers the exposed upper surface of the resin 3.

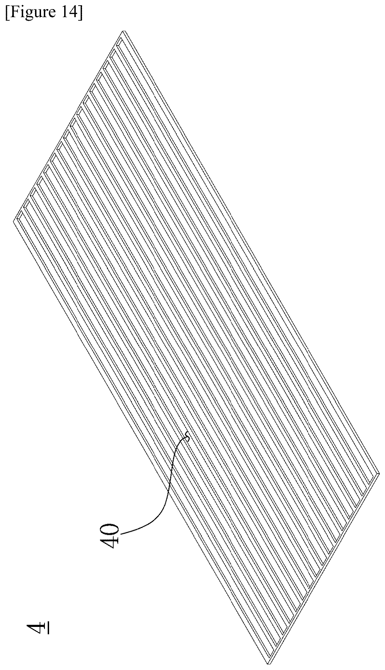

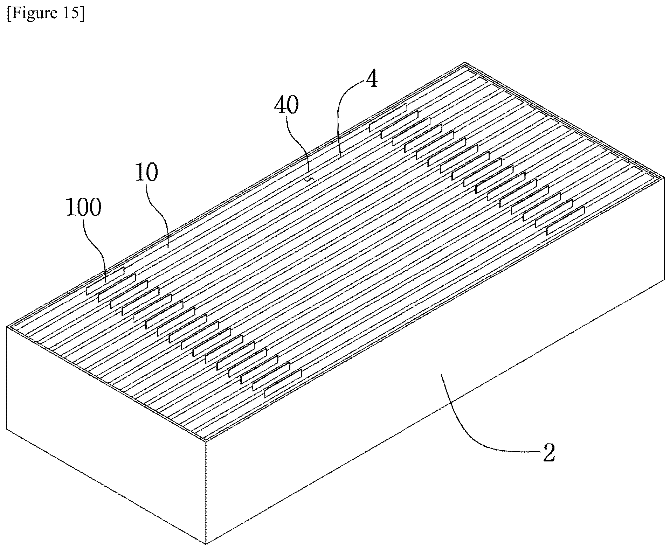

Hereinafter, with reference to FIGS. 14 and 15, the shape of the resin cover and the installation of the bus bar according to an embodiment of the present invention will be described in detail.

FIG. 14 illustrates a resin cover according to an embodiment of the present invention. Referring to FIG. 14, according to the embodiment, since the upper end portion of the resin 3 is disposed lower than that of the plurality of battery cells 10, the exposed surface of the resin 3 may be present except for the area where the battery cells 10 protrude. Accordingly, the resin cover 4 may have a plurality of slits 40 with the plurality of battery cells 10 inserted therein vertically. The plurality of slits 40 may extend in lengthwise direction and be arranged in widthwise direction similar to the plurality of battery cells 10.

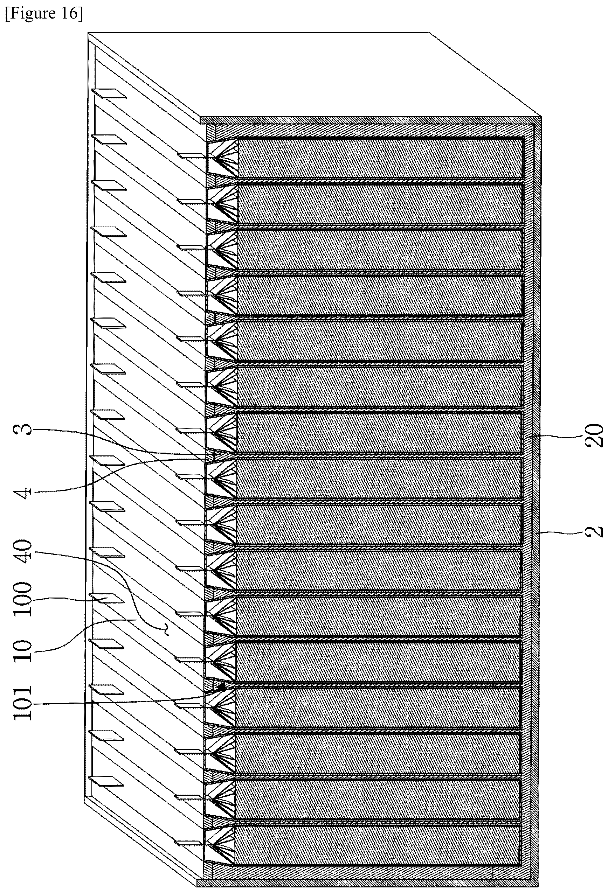

FIGS. 15 and 16 illustrate an exterior of a battery module and a cross-section thereof, respectively, according to an embodiment of the present invention. Referring to FIGS. 15 and 16, the resin cover 4 may be installed to cover the exposed surface of the resin 3. Here, the plurality of battery cells 10 may be more firmly fixed while maintaining an appropriate gap from each other by being inserted into the slits 40.

According to an modified example, the upper end portion of the resin 3 may be disposed higher than that of the plurality of battery cells 10 excluding the electrode leads 100, and the resin cover 4 may not have the slit 40 or may be configured such that only the electrode leads 100 are inserted therein.

According to the embodiment, since the resin cover 4 is provided, overflow or unexpected deformation of the resin 3 may be prevented before the resin 3 is cured.

The battery module M may further include bus bar (not shown) disposed above the plurality of battery cells 10 and electrically connecting the electrode leads 100 to each other. The bus bar may be included in a bus bar frame provided above the plurality of battery cells 10 and/or the resin cover 4.

According to the embodiment, since the resin cover 4 prevents overflow or deformation of the resin 3, the bus bar may be installed even before the resin 3 is cured. In addition, according to the embodiment, since all of the electrode leads 100 protrude in upward direction, the bus bar frame may also be integrally provided at the top instead of the front and rear ends of the battery module M as a pair, thereby making assembly simple and economical.

According to a modified example, the battery module M may not include the resin cover 4, and thus the bus bar may be installed after the resin 3 is cured.

### [STRUCTURES OF BATTERY PACK AND VEHICLE]

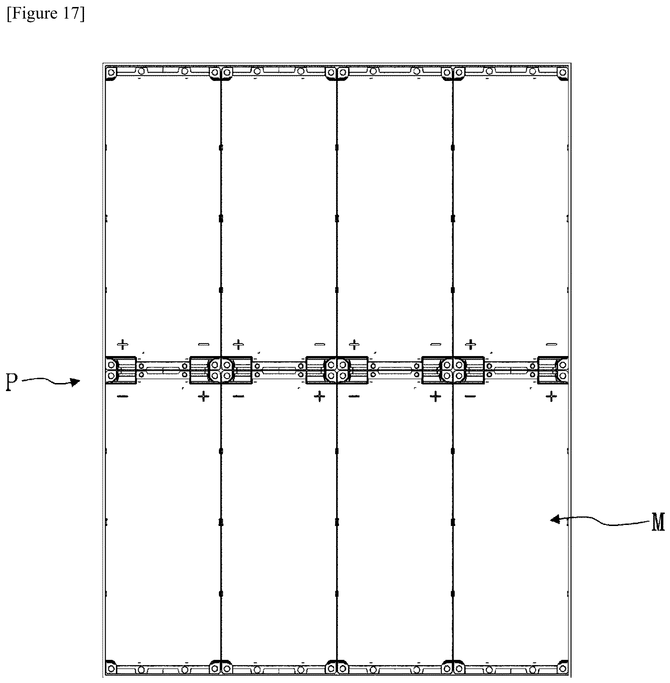

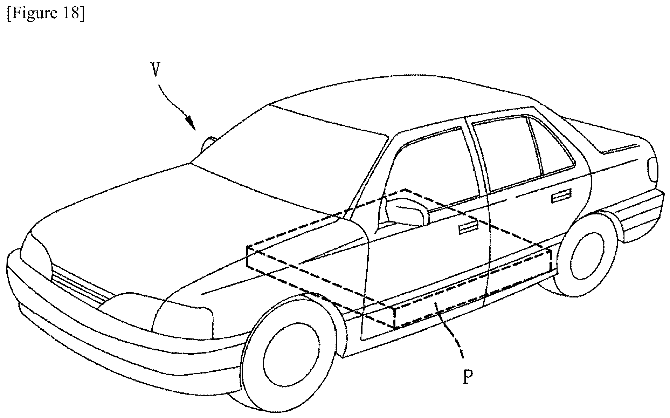

Hereinafter, with reference to FIGS. 17 and 18, a battery pack accommodating the battery module and a structure of a vehicle including the battery pack according to an embodiment of the present invention will be described.

FIGS. 17 and 18 illustrate a battery pack including a battery module and a vehicle including the battery pack according to an embodiment of the present invention, respectively. Referring to FIGS. 17 and 18, a plurality of battery modules M may be integrated into a battery pack P to increase the capacity and/or voltage thereof. The battery pack P may include an exhaust device capable of discharging gases and flames emitted when the battery module M ignites. The battery pack P may be built into a vehicle V as a power source. The vehicle V may include an electric vehicle, a hybrid vehicle, etc.

### [METHOD OF MANUFACTURING BATTERY MODULE]

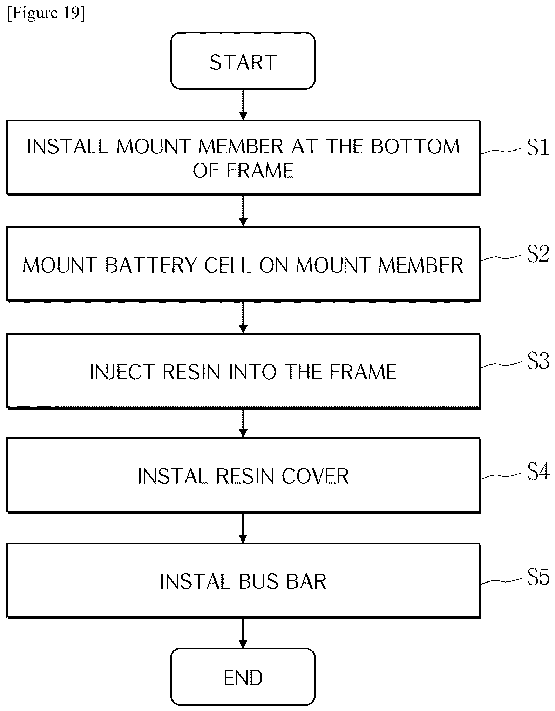

Hereinafter, with reference to FIG. 19, a method of manufacturing battery module according to an embodiment of the present invention will be described in detail.

FIG. 19 illustrates a method of manufacturing a battery module according to an embodiment of the present invention. Referring to FIG. 19, the method of manufacturing a battery module according to an embodiment of the present invention may include: steps S1 and S2 of placing the plurality of battery cells 10 in the frame 2; and a step S3 of injecting an uncured resin 3 into the frame 2 after performing the step S2.

According to the present invention, the electrical, structural and/or thermal stability of the battery module M may be improved by filling and curing the resin 3 in the gap between the plurality of battery cells 10 and the frame 2, thereby providing a simple and economical method of manufacturing the battery module M.

The uncured resin 3 may be partially injected into the frame 2 before the plurality of battery cells 10 is placed in the frame 2, and more uncured resin 3 may be injected after the plurality of battery cells 10 is placed in the frame 2. That is, the method of manufacturing a battery module may further include a step of partially injecting the uncured resin 3 onto the bottom of the frame 2 before the step S2 of placing the plurality of battery cells 10 in the frame. Accordingly, sufficient resin 3 may be interposed between the plurality of battery cells 10 and the bottom of the frame 2.

According to an embodiment of the present invention, the steps S1 and S2 of placing the plurality of battery cells 10 in the frame 2 includes: the step S1 of placing the mount member 20 at the bottom of the frame 2; and mounting the plurality of battery cells 10 on the mount member 20.

According to an embodiment of the present invention, the method of manufacturing a battery module may further include: a step S4 of installing the resin cover; and the step S5 of installing the bus bar. In this case, it is efficient that the bus bar may be installed before the resin 3 is cured.

In contrast, when the battery module M does not have the resin cover 4, the method of manufacturing a battery module may include the step of waiting for the uncured resin 3 to cure before installing the bus bar.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a plurality of battery cells stacked in widthwise direction, each of the plurality of battery cells having a pair of electrode leads protruding in upward direction;
a frame having an open upper portion and accommodating the cell stack; and
a resin having an insulating property and filling at least a portion of a space between the cell stack and the frame,
wherein at least one of the plurality of battery cells has a tapered portion at an upper end portion thereof, the tapered portion having a width narrowing in upward direction, and
an upper end portion of the resin is disposed higher than where the tapered portion begins.

2. The battery module of claim 1, further comprising a mount member disposed at a bottom of the frame whereon the plurality of battery cells are mounted with a predetermined interval therebetween,
wherein lower end portions of each of the plurality of battery cells are in direct contact with the mount member.

3. The battery module of claim 1, wherein the resin comprises at least one of a phase changing material and a thermally conductive resin.

4. The battery module of claim 1, wherein the resin comprises a flame retardant material.

5. The battery module of claim 2, wherein the mount member comprises at least one of a phase changing material and a thermally conductive resin.

6. The battery module of claim 2, wherein the mount member comprises a flame retardant material.

7. The battery module of claim 1, wherein the resin at least fills a space between a pair of battery cells.

8. The battery module of claim 1, wherein the upper end portion of the resin is disposed higher than those of the plurality of cells excluding the pair of electrode leads.

9. The battery module of claim 1, wherein a lower end portion of the resin is disposed lower than those of the plurality of battery cells.

10. The battery module of claim 1, wherein further comprising a resin cover covering an exposed upper surface of the resin.

11. The battery module of claim 10, wherein the upper end portion of the resin is disposed lower than those of the plurality of batter cells, and
the resin cover is provided with a plurality of slits arranged in widthwise direction with the plurality of battery cells inserted therein vertically.

12. The battery module of claim 1, further comprising a bus bar disposed above the plurality of battery cells and electrically connecting the electrode leads to each other.

13. A battery pack comprising a battery module of any one of claims 1 to 12.

14. A vehicle comprising a battery pack of claim 13.

15. A method of manufacturing a battery module of claim 1, comprising:
(a) placing a plurality of battery cells in a frame; and
(b) injecting an uncured resin into the frame after performing (a).

16. The method of manufacturing a battery module of claim 15, wherein (b) comprises:
partially injecting the uncured resin into the frame before placing the plurality of battery cells in the frame; and
injecting again the uncured resin into the frame after placing the plurality of battery cells in the frame.

17. The method of manufacturing a battery module of claim 15, wherein,
the battery module further comprises a mount member disposed at a bottom of the frame whereon the plurality of battery cells are mounted with a predetermined interval therebetween, and
(a) comprises:
placing the mount member at the bottom of the frame; and
mounting the plurality of battery cells on the mount member.

18. The method of manufacturing a battery module of claim 15, further comprising:
waiting for the uncured resin to cure; and
installing a bus bar electrically connecting electrode leads to each other.

19. The method of manufacturing a battery module of claim 15, further comprising:
installing a resin cover covering an exposed upper surface of the resin; and
installing a bus bar electrically connecting electrode leads to each other.
